Europäisches Patentamt

European Patent Office

Office européen des brevets

(11) Veröffentlichungsnummer: **0 235 568**
**B1**

(12) **EUROPÄISCHE PATENTSCHRIFT**

(45) Veröffentlichungstag der Patentschrift: **12.09.90**

(21) Anmeldenummer: **87101140.9**

(22) Anmeldetag: **28.01.87**

(51) Int. Cl.⁵: **F 16 J 15/32**

(54) **Doppelabstreifer-Anordnung.**

(30) Priorität: **06.02.86 DE 3603669**

(43) Veröffentlichungstag der Anmeldung:
**09.09.87 Patentblatt 87/37**

(45) Bekanntmachung des Hinweises auf die
Patenterteilung:
**12.09.90 Patentblatt 90/37**

(84) Benannte·Vertragsstaaten:
**ES FR GB IT**

(56) Entgegenhaltungen:
**DE-A-1 940 698**
**FR-A-2 245 888**
**FR-A-2 256 353**

(73) Patentinhaber: **Busak + Luyken GmbH & Co.**
**Handwerkstrasse 5-7**
**D-7000 Stuttgart 80 (DE)**
(73) Patentinhaber: **W.S. Shamban Europa A/S**
**No. 17, Fabriksvej**
**DK-3000 Helsingor (DK)**

(72) Erfinder: **Edlund, Roy**
**Mittlerer Bauernwaldweg 22**
**D-7000 Stuttgart 1 Botnang (DE)**
Erfinder: **Hom, Jorgen**
**Mothsweg 12B**
**DK-2840 Holte (DK)**

(74) Vertreter: **Patentanwälte Kohler - Schwindling -**
**Späth**
**Hohentwielstrasse 41**
**D-7000 Stuttgart 1 (DE)**

Courier Press, Leamington Spa, England.

**Beschreibung**

Die Erfindung betrifft eine Doppelabstreifer-Anordnung mit einem in die Nut eines ersten von zwei senkrecht zur Nut gegeneinander beweglichen Machinenteilen eingelegten Abstreifring aus zähelastischem Kunststoff und einem zwischen Abstreifring und Nutengrund angeordneten, den Abstreifring radial belastenden Spannring aus gummielastischem Material, wobei der Abstreifring an einem Ende einen am zweiten Maschinenteil flachanliegenden Flächenabschnitt aufweist, und am zweiten Maschinenteil ferner mit einer Kante anliegt, die mindestens eine ansteigende Kegelfläche aufweist und an seiner dem Nutengrund zugewandten Seite eine dem flachen Flächenabschnitt gegenüberliegende, den Spannring aufnehmende Aussparung aufweist, wobei eine zum Nutengrund konzentrische Fläche der Aussparung zum Ende es Abstreifringes hin ansteigt, so daß sich der den Spannring aufnehmende Raum zum Ende des Abstreifinges hin verengt und die vom Spannring erzeugte Kraft eine längs des flachen Flächenabschnittes von dessen innerem Ende wenigstens annähernd linear abfallende, aber auch noch an dessen äußerem Ende definierte Flächenpressung erzeugt und der Abstreifring wenigstens unter normalen Betriebsbedingungen an der dem Spannring abgewandten Flanke der Nut in Anlage gehalten wird.

Eine derartige Dichtungsanordnung ist durch die Druckschrift DE-A-1940 698 bekanntgeworden.

Die bekannte Dichtungsanordnung weist einen Abstreifring auf, der an der Nutflanke der Hochdruckseite anliegt. Am abzudichtenden Maschinenteil liegt der Abstreifring mit drei flachen Flächenabschnitten auf, die jeweils von im Querschnitt rechteckförmigen Nuten durchbrochen sind. An die zur Hochdruckseite weisende Nut schließt sich eine Kante an, die von der Schnittlinie der Außenfläche der Nut und einer schräg ansteigenden zur Hochdruckseite hin sich öffnenden Fläche gebildet wird. Das Medium der Hochdruckseite bewirkt einen Druck auf die schräg verlaufende Fläche, so daß sich die von der Schnittlinie gebildete Kante bei stark ansteigendem Druck vom abzudichtenden Maschinenteil abheben kann.

Solche Doppelabstreifer-Anordnungen finden in vielfältigen Ausführungsformen Anwendung, insbesondere bei hydraulischen Kolben-Zylindereinheiten, bei denen Abstreifring und Spannring in die Stangenführung eingebaut sind. Dabei sind der Doppelabstreifer-Anordnung hochdruckseitig ein oder mehrere Dichtungsringe vorgeschaltet, so daß der Abstreifring im wesentlichen nur die Aufgabe hat, an dem äußeren Teil der Stange anhaftende Verunreingungen abzustreifen und ihr Eindringen in den eigentlichen Dichtungsbereich zu verhindern. Die außenliegende Abstreiflippe, die bei der Doppelabstreifer-Anordnung der eingangs genannten Art von dem flach anliegenden Flächenabschnitt des Abstreifringes gebildet wird, muß ausreichend kräftig sein, um auch grobe Schmutzteile mit Sicherheit von der Stangenoberfläche lösen zu können, aber auch gleichzeitig ausreichend dicht sein, um anhaftende Öle und Fette mit Sicherheit abzustreifen. Zugleich soll solch ein Abstreifring auch noch verhindern, daß durch die vorgeschaltete Dichtungsanordnung hindurchtretende Leckflüssigkeit nach außen dringt.

Die bisher bekannten Doppelabstreifer-Anordnungen erfüllen diesen Zweck nicht in ausreichendem Maße. Der Erfindung liegt daher die Aufgabe zugrunde, eine Doppelabstreifer-Anordnung der eingangs genannten Art so zu verbessern, daß sie eine einwandfreie Sperre sowohl gegen austretende Leckflüssigkeit als auch gegen eindringende Fremdkörper unterschiedlichster Art bildet.

Diese Aufgabe wird nach der Erfindung durch die Kombination der folgenden Merkmale gelöst:

(a) Die Breite der Nut ist nur wenig größer als die Breite des Abstreifringes und die Tiefe und Breite der Aussparung sowie die Abmessungen des Spannringes sind so aufeinander abgestimmt, daß das Anpreßmaximum des Spannringes über der inneren Kante des flachen Flächenabschnittes liegt;

(b) Die an die äußere Kegelfläche angrenzende Stirnfläche ist mit radialen Entlastungsnuten versehen;

(c) Die Kante ist von der Schnittlinie zweier nach außen bzw. in Richtung auf den flachen Flächenabschnitt ansteigenden Kegelflächen gebildet.

Bei den bisher bekannten Doppelabstreifer-Anordnungen ist der Abstreifring mit axialem Spiel in die Nut eingebaut und der Spannring so dimensioniert, daß er nur eine radial Spannkraft ausübt. Als Folge davon werden Abstreifring und Spannring bei den axialen Relativbewegungen zwischen den Maschinenteilen mitgenommen, so daß der Abstreifring in der Nut axial verschoben wird und der Spannring, bei dem es sich normalerweise um einen O-Ring handelt, zwischen Abstreifring und Nutengrund eine Rollbewegung ausführt. Diese Bewegungen haben einen Pumpeffekt zur Folge, der besonders durch das Überrollen von Leckflüssigkeit durch den Spannring verstärkt wird. Diese Pumpwirkung ist durch die erfindungsgemäße Ausbildung der Doppelabstreifer-Anordnung vermieden. Durch die Anlage des Abstreifringes an der hochdruckseitigen Nutflanke würde jedoch der Raum zwischen Abstreifring und Nutengrund abgedichtet und es bestünde die Gefahr, daß der Abstreifring mit seiner Dichtkante hochdruckseitig vom anderen Maschinenteil abgehoben wird. Diese Gefahr wird dadurch vermieden, daß an dem hochdruckseitigen Ende die radialen Entlastungsnuten angebracht sind, die einen Druckausgleich zwischen Vorder- und Rückseite des Abstreifringes gewährleisten.

Die von dem flachen Flächenabschnitt gebildete Dichtungszone hat die Doppelaufgabe einer Fluiddichtung zur Hochdruckseite hin und einer Dichtung gegen von außen eindringenden Schmutz. Die Abstreifwirkung verlangt eine hohe Flächenpressung am äußeren Rand des Abstreifringes. Ebenso muß aber auch am inneren Rand des flachen Flächenabschnittes eine hohe Flächenpressung vorhanden sein, um eine Dichtungswirkung gegen austretendes Fluid zu gewährleisten. Diese beiden Forderungen, deren gleichzeitige Erfüllung nicht ohne weiteres möglich erscheint, werden bei der erfindungsgemäßen Ausbildung der Doppelabstreifer-Anordnung ebenfalls durch die angegebene Dimensionierung des Abstreifringes, des Spannringes und der Nut erfüllt. Hierfür ist besonders die Ausbildung der zum Nutengrund konzentrischen Fläche der Aussparung als Kegelfläche von Bedeutung, weil sie gewährleistet, daß die Flächenpressung im Bereich des flachen Flächenabschnittes, die am inneren Rand dieses Flächenabschnittes ihr Maximum hat, zum Außenrand nicht undefiniert abfällt, sondern auch noch am Außenrand einen definierten, für eine einwandfreie Abstreifwirkung ausreichenden Wert hat. Demgemäß ergibt das Zusammenwirken der Merkmale der erfindungsgemäßen Doppelabstreifer-Anordnung eine bedeutende Verbesserung bezüglich der Abstreif- und Dichtwirkung gegenüber herkömmlichen Doppelabstreifer-Anordnungen der eingangs genannten Art.

Spannring und Abstreifring der erfindungsgemäßen Doppelabstreifer-Anordnung können aus den gleichen Werkstoffen bestehen, wie sie bisher für solche Anordnungen verwendet worden sind. Beim Spannring kann es sich um herkömmliche O-Ringe aus elastomeren Werkstoffen handeln, während der Abstreifring aus insbesondere modifizierten oder gefüllten PTFE-Werkstoffen bestehen kann. Bei einer besonders bevorzugten Ausführungsform der Erfindung besteht jedoch der Abstreifring aus Polyurethan. Polyurethan-Werkstoffe verbinden eine ausreichende Härte und Zähigkeit mit einer hohen Elastizität, die gewährleistet, daß sich der Abstreifring Unregelmäßigkeiten in der Oberfläche des anderen Maschinenteiles optimal anpaßt. Hierfür ist es auch vorteilhaft, wenn der Durchmesser des Abstreifringes im entspannten Zustand vom Durchmesser des andren Maschinenteiles um ca. 1% im Sinne einer Überschneidung beider Teile abweicht.

Für das oben erwähnte Einstellen eines ausreichenden, aber auch nicht zu großen Anpreßdruckes am äußeren Rand des flachen Flächenabschnittes kann es weiterhin zweckmäßig sein, wenn der flache Flächenabschnitt im entspannten Zustand des Abstreifringes gegenüber der Ringachse um einen Winkel geneigt ist, der bis zu +15° betragen kann.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 einen Querschnitt durch eine Doppelabstreifer-Anordnung nach der Erfindung in stark vergrößertem Maßstab,

Fig. 2 ein Diagramm, das den Verlauf der Flächenpressung über dem flachen Flächenabschnitt des Abstreifringes der Doppelabstreifer-Anordnung nach Fig. 1 wiedergibt, und

Fig. 3 einen Querschnitt durch den Abstreifring der Doppelabstreifer-Anordnung nach Fig. 1 in entspanntem Zustand.

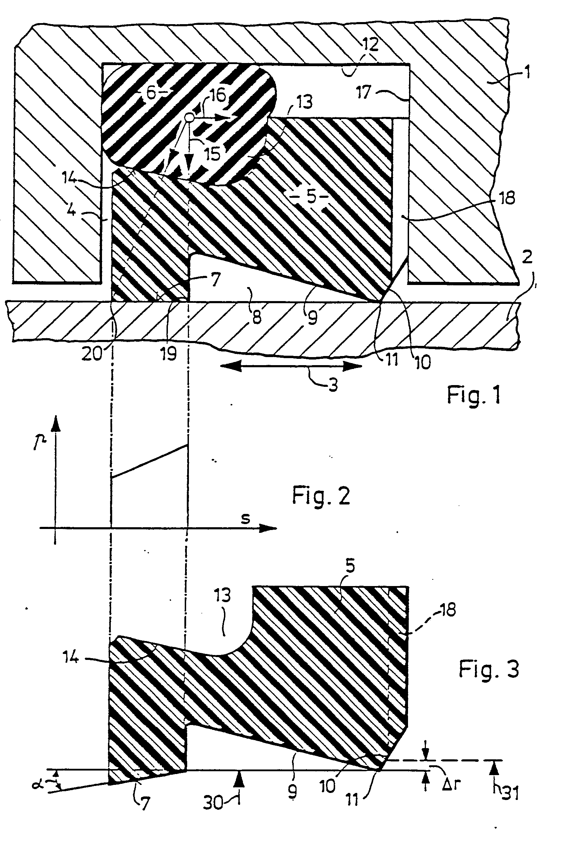

Die in Fig. 1 dargestellte Doppelabstreifer-Anordnung dient zum Abstreifen von Leckageflüssigkeit im Spalt zwischen einem ersten Maschinenteil 1 und einem zweiten Maschinenteil 2, die sich im Betrieb in Richtung des Pfeiles 3 axial gegeneinander bewegen. Typischerweise handelt es sich bei dem zweiten Maschinenteil 2 um die Stange und bei dem ersten Maschinenteil 1 um den Zylinder einer hydraulischen Kolben-Zylinder-Einheit.

In das erste Maschinenteil 1 ist eine zur Bewegungsrichtung 3 senkrechte, kreisringförmige Nut 4 eingestochen, in der sich ein Abstreifring 5 und ein Spannring 6 befinden. Der Abstreifring 5 besteht aus einem zähelastischen Polyurethan. Er hat einen annähernd Z-förmigen Querschnitt mit sich parallel zu den Flanken der Nut 4 erstreckenden Querbalken. Das in bezug auf die Nut 4 außen liegende Ende des einen Querbalkens bildet einen am zweiten Maschinenteil 2 flach anliegenden Flächenabschnitt 7, an den sich eine den Mittelteil der Z-Form begrenzende, im Querschnitt dreieckförmige Aussparung 8 anschließt. Am anderen Ende ist der Abstreifring 5 an der dem zweiten Maschinenteil 2 zugewandten Seite mit einer Fase versehen, so daß zwei Kegelflächen 9, 10 vorhanden sind, die sich in einer Kante 11 schneiden, mit welcher der Abstreifring 5 nahe seinem anderen Ende am zweiten Maschinenteil 2 anliegt. Der andere Querbalken der Z-Form steht mit seinem Ende dem Nutengrund 12 mit Abstand gegenüber. Durch die Z-Form des Abstreifringes 5 entsteht eine dem Querbalken mit dem flachen Flächenabschnitt 7 gegenüberliegende Aussparung 13, die von dem O-Ring 6 ausgefüllt ist. Die zum Nutengrund 12 konzentrische Fläche 14 der Aussparung 13 zeigt zum Ende des Abstreifringes 5 hin an, so daß sich die Aussparung 13 zum Ende des Abstreifringes 5 hin verengt.

Wie aus Fig. 1 ersichtlich, sind die Abmessungen der Nut 4, des Abstreifringes 5 mit der Aussparung 13 und des O-Ringes 6 so gewählt, daß der O-Ring im Querschnitt eine erhebliche Verformung erleidet und auf den Abstreifring 5 nicht nur eine radiale Spannkraft 15 ausübt, sondern auch eine axiale Spannkraft 16, durch die der Abstreifring 5 fest an die hochdruckseitige Flanke 17 der Nut 4 angepreßt wird. An dieser hochdruckseitigen Stirnfläche weist der Abstreifring 5 radiale Entlastungsnuten 18 auf, die jedoch nicht so tief sind, daß sie bis zu der Kante 11 reichen. Weiterhin ist durch die Dimensionierung der Anordnung gewährleistet, daß das durch die radiale Spannkraft 15 erzeugte Anpreßmaximum an der inneren, also hochdruckseitigen Kante 19 des flachen Flächenabschnittes 7 liegt, wie es auch das Diagramm nach Fig. 2 veranschaulicht, in dem auf der Abszisse die axiale Ausdehnung s des Abstreifringes 5 und auf der Ordinate die Flächenpressung p aufgetragen ist, mit der der Abstreifring 5 am Maschinenteil 2 anliegt. Das Diagramm zeigt lediglich den qualitativen Verlauf der Flächenpressung an, nicht aber deren absolute Größe, die von den Dimensionen der Doppelabstreifer-Anordnung und den Betriebsbedingungen abhängt, bei denen eine solche Doppelabstreifer-Anordnung Anwendung finden soll.

Die axiale Einspannung des Abstreifringes 5 in der Nut 4 ist so stark, daß der Abstreifring 5 unter dem Einfluß der vom zweiten Maschinenteil 2 ausgeübten Mitnahmekräfte in der Nut 4 keine Axialbewegungen ausführen kann. Daher erleidet auch der Spannring 6 unter Betriebsbedingungen keine sich periodisch ändernden Deformationen, führt also insbesondere keine irgendwelchen Bewegungen des Abstreifringes 5 folgenden Rollbewegungen aus. Auf diese Weise sind Leckagen durch "Pumpbewegungen" der Doppelabstreifer-Anordnung mit Sicherheit ausgeschaltet.

Die von den Kegelflächen 9, 10 gebildete Kante 11 dient zum Abstreifen von Lecköl, das hochdruckseitig zur Doppelabstreifer-Anordnung gelegene Dichtungsanordnungen durchdringen kann. Die Entlastungsnuten 18 gewährleisten trotz der festen Anlage des Abstreifringes 5 an der hochdruckseitigen Nutflanke 17 einen Druckausgleich zur Rückseite des Abstreifringes 5 hin, so daß an der dem zweiten Maschinenteil 2 zugewandten Seite des Abstreifringes 5 kein Druckaufbau stattfinden kann, durch den die Kante 11 vom zweiten Maschinenteil 2 abgehoben würde. Die Kante 11 bildet daher bereits eine gute Abdichtung, wobei die flache Steigung der sich niederdruckseitig an die Kante 11 anschließenden Kegelfläche 9 noch eine gewisse Rückförder-Wirkung hat. Trotzdem in den dreieckförmigen Raum 8 eingedrungenes Lecköl wird endgültig durch die hohe Flächenpressung an der Kante 19 des Flächenabschnittes 7 abgesperrt. Das Anpreßmaximum an der Kante 19 gewährleistet, daß kein Lecköl unter den Flächenabschnitt 7 gelangen kann. Gleichzeitig gewährleistet die an der Außenkante 20 des Flächenabschnittes 7 aufrechterhaltene hohe Flächenpressung auch ein sicheres Abstreifen von am Bauteil 2 anhaftenden Verunreinigungen jeder Art, einschließlich von Schmiermitteln, da diese Verunreinigungen drucklos vorliegen.

Für die Wirkung der erfindungsgemäßen Doppelabstreifer-Anordnung ist es vorteilhaft, wenn der Abstreifring 5 mit einer gewissen Eigenspannung an dem Maschinenteil 2 anliegt. Daher wird der Abstreifring 5 zweckmäßig so dimensioniert, wie es in Fig. 3 veranschaulicht ist. Für den Fall, daß das Maschinenteil 2 eine Stange ist, ist der Durchmesser r1 30 der Anlagefläche des Abstreifringes 5 um einen Betrag $\triangle$r kleiner als der Durchmesser r2 31 der Stange, und zwar derart, daß $\triangle$r etwa 1% des Nenndurchmessers, also gewöhnlich des Stangendurchmessers r2 31, beträgt. Ebenso kann es für das Einhalten der der in Fig. 2 dargestellten Flächenpressung von Vorteil sein, wenn der Flächenabschnitt 7 bei entspanntem Abstreifring 5 gegenüber der Zylinderfläche um einen Winkel α geneigt ist, so daß die Anlagefläche 7 eine Kegelfläche mit sich nach außen vergrößerndem oder verminderndem Durchmesser bildet. Der Winkel α kann je nach den gewählten Werkstoffen, Dimensionen und Betriebsbedingungen bis zu ±15° betragen.

Es versteht sich, daß die Erfindung nicht auf das dargestellte Ausführungsbeispiel beschränkt ist, sondern Abweichungen davon möglich sind, ohne den Rahmen der Erfindung zu verlassen. Insbesondere wurde die Erfindung anhand eines Ausführungsbeispieles beschrieben, bei dem sich die Nut in einem eine Stange umgebenden Maschinenteil befindet. Statt dessen könnte eine in entsprechender Weise umgekehrt ausgebildete Doppelabstreifer-Anordnung auch am Umfang eines innen liegenden Maschinenteiles angebracht sein. Weiterhin können sich vielfältige Abweichungen bezüglich der Relationen der einzelnen Komponenten der Doppelabstreifer-Anordnung ergeben, also insbesondere bezüglich Tiefe und Breite der Nut und demgemäß auch bezüglich der relativen Durchmesser von Abstreifring und Spannring.

**Patentansprüche**

1. Doppelabstreifer-Anordnung mit einem in die Nut (4) eines ersten von zwei senkrecht zur Nut (4) gegeneinander beweglichen Maschinenteilen (1, 2) eingelegten Abstreifring (5) aus zähelastischem Kunststoff und einem zwischen Abstreifring (5) und Nutengrund (12) angeordneten, den Abstreifring (5) radial belastenden Spannring (6) aus gummielastischem Material, wobei der Abstreifring (5) an einem Ende einen am zweiten Maschinenteil (1, 2) flach anliegenden Flächenabschnitt (7) aufweist und am zweiten Maschinenteil (1, 2) ferner mit einer Kante (11) anliegt, die mindestens eine ansteigende Kegelfläche (10) aufweist und an seiner dem Nutengrund (12) zugewandten Seite eine dem flachen Flächenabschnitt (7) gegenüberliegende, den Spannring (6) aufnehmende Aussparung (13) aufweist, wobei eine zum Nutengrund (12) konzentrische Fläche (14) der Aussparung (13) zum Ende des Abstreifringes (5) hin ansteigt, so daß sich der den Spannring (6) aufnehmende Raum zum Ende des Abstreifringes (5) hin verengt und die vom Spannring (6) erzeugte Kraft eine längs des flachen Flächenabschnittes (7) von dessen innerem Ende wenigstens annähernd linear abfallende, aber auch noch an dessen äußerem Ende definierte Flächenpressung erzeugt und der Abstreifring (5) wenigstens unter normalen Betriebsbedingungen an der dem Spannring (6) abgewandten Flanke (17) der Nut (4) in Anlage gehalten wird, gekennzeichnet durch die Kombination der folgenden Merkmale:

(a) Die Breite der Nut (4) ist nur wenig größer als die Breite des Abstreifringes (5). und die Tiefe und Breite der Aussparung (13) sowie die Abmessungen des Spannringes (6) sind so aufeinander abgestimmt, daß das Anpreßmaximum des Spannringes (6) über der inneren Kante (19) des flachen Flächenabschnittes (7) liegt;

(b) Die an die äußere Kegelfläche (10) angrenzende Stirnfläche ist mit radialen Entlastungsnuten (18) versehen;

(c) Die Kante (11) ist von der Schnittlinie zweier nach außen bzw. in Richtung auf den flachen Flächenabschnitt ansteigenden Kegelflächen (9, 10) gebildet.

2. Doppelabstreifer-Anordnung nach Anspruch 1, dadurch gekennzeichnet, daß der Abstreifring (5) aus Polyurethan besteht.

3. Doppelabstreifer-Anordnung nach Anspruch 1 oder 2, dadurch gekennzeichnet, daß der Durchmesser r1 (30) der Anlagefläche des Abstreifringes (5) im entspannten Zustand vom Durchmesser r2 (31) des zweiten Maschinenteiles (2) abweicht und um ca. 1% im Sinne einer Überschneidung kleiner ist.

4. Doppelabstreifer-Anordnung nach einem der vorhergehenden Ansprüche, dadurch gekennzeichnet, daß der flache Flächenabschnitt (7) im entspannten Zustand des Abstreifringes (5) gegenüber der Ringachse um einen Winkel (α) geneigt ist, der bis zu ± 15° betragen kann.

**Revendications**

1. Dispositif de raclage double comportant, inséré dans la fente (4) d'une première partie de deux parties mécaniques (1, 2) mobiles l'une par rapport à l'autre perpendiculairement à ladite fente (4), un segment racleur (5) en matière synthétique visco-élastique et, disposée entre le segment racleur (5) et le fond (12) de la fente, une bague de serrage (6) en matière élastique s'appuyant radialement sur le segment racleur (5), ledit segment racleur (5) présentant sur une extrémité une face de contact (7) s'appliquant à plat sur la deuxième partie mécanique (1, 2) sur laquelle il s'applique également par une arête (11) qui présente au moins une surface conique ascendante (10) ainsi que, sur son côté orienté vers le fond (12) de la fente, un évidement (13) opposé à la face de contact (7) et recevant la bague de serrage (6), une face concentrique (14) de l'évidement (13) par rapport au fond (12) de la fente, montant progressivement vers l'extrémité du segment racleur (5), de telle sorte que l'espace recevant la bague de serrage (6) se rétrécit en direction de l'extrémité du segment racleur (5) et que la force générée par la bague de serrage (6) génère une compression superficielle diminuant selon une courbe sensiblement linéaire le long de la face de contact (7) à partir de l'extrémité interne de celle-ci tout en restant conservée sur son extrémité externe, le segment racleur (5) étant maintenu en position appliquée contre le flanc (17) de la fente (4) opposé à la bague de serrage (6), tout du moins dans les conditions de fonctionnement normales, caractérisé par la combinaison des caractéristiques suivantes:

(a) La largeur de la fente (4) n'est que faiblement supérieure à la largeur du segment racleur (5) et la profondeur et la largeur de l'évidement (13), ainsi que les dimensions de la bague de serrage (6), sont accordées les unes sur les autres de telle sorte que la compression maximale de la bague de serrage (6) se situe au-dessus de l'arête interne (19) de la face de contact (7);

(b) La surface frontale limitrophe de la surface conique externe (10) est munie de fentes radiales de délestage (18);

(c) L'arête (11) est formée par la ligne d'intersection de deux faces coniques (9, 10) ascendante vers l'extérieur à savoir en direction de la face de contact.

2. Dispositif de raclage double selon la revendication 1 caractérisé par le fait que le segment racleur (5) est réalisé en polyuréthane.

3. Dispositif de raclage double selon les revendications (1, 2) caractérisé par le fait que, à l'état détendu, le diamètre r1 (30) de la face d'application du segment racleur (5) est différent du diamètre r2 (31) de la deuxième partie mécanique (2) et qu'il est inférieur à ce dernier d'environ l% dans le sens d'un chevauchement.

4. Dispositif de raclage double selon l'une des revendications précédentes caractérisé par le fait que la face de contact (7), à l'état détendu du segment racleur (5), est inclinée d'un angle (α) en direction de l'axe dudit segment, cet angle (α) pouvant être égal à plus ou moins 15°.

**Claims**

1. A double wiper arrangement comprising a wiper ring (5) of viscoplastic material inserted into the groove (4) of a first of two machine parts (1, 2) adapted for movement in relation to each other at right-angles to the groove (4), and comprising, disposed between wiper ring (5) and groove bottom (12) and radially loading the wiper ring (5), a clamping ring (6) of rubber-elastic material, the wiper ring (5) having at one end a surface portion (7) which bears flat against the second machine part (1, 2) and furthermore having an edge (11) bearing on the second machine part (1, 2) and having at least one rising bevelled surface (10) and having on its side which is towards the groove bottom (12), disposed opposite the flat surface portion (7), a recess (13) which accommodates the clamping ring (6), a surface (14) of the recess (13) which is concentric with the groove bottom (12) rising towards the end of the wiper ring (5) so that the space accommodating the clamping ring (6) tapers towards the end of the wiper ring (5) and so that the force generated by the clamping ring (6) generates a surface pressure which diminishes at least approximately linearly from the inner end of and along the flat surface portion (7), although it is still defined at the outer end thereof, the wiper ring (5) being, at least under normal working conditions, so held that it bears on that flank (17) of the groove (4) which is remote from the clamping ring (6), characterised by the combination of the following features:

a) the width of the groove (4) is only slightly greater than the width of the wiper ring (5) and the depth and width of the recess (13) as well as the dimensions of the clamping ring (6) are so attuned to one another that the maximum pressure applied by the clamping ring (6) lies above the inner edge (19) of the flat surface portion (7);

b) the end face adjacent the outer conical surface (10) is provided with radial relieving grooves (18);

c) the edge (11) is constituted by the line of intersection of two conical surfaces (9, 10) which rise outwardly or in the direction of the flat surface portion.

2. A double wiper arrangement according to claim 1, characterised in that the wiper ring (5) consists of polyurethane.

3. A double wiper arrangement according to claim 1 or 2, characterised in that the diameter r1 (30) of the surface applied by the wiper ring (5) in the relaxed condition diverges from the diameter r2 (31) of the second machine part (2) and is about !% smaller in the sense of an overlap.

4. A double wiper arrangement according to one of the preceding claims, characterised in that the flat surface portion (7) can in the relaxed state of the wiper ring (5) be inclined in respect of the ring axis by an angle ($\alpha$) which may be anything up to ± 15°.

Fig. 1

Fig. 2

Fig. 3